Europäisches Patentamt

European Patent Office

Office européen des brevets

(11) Numéro de publication: **0 248 301**
**B1**

# FASCICULE DE BREVET EUROPEEN

(45) Date de publication du fascicule du brevet:
**14.06.89**

(21) Numéro de dépôt: **87107547.9**

(22) Date de dépôt: **23.05.87**

(51) Int. Cl.⁴: **B29D 30/70**, B29D 30/30

(54) **Procédé et machine de fabrication d'un renforcement pour pneumatique.**

(30) Priorité: **02.06.86 FR 8608011**

(43) Date de publication de la demande:
**09.12.87 Bulletin 87/50**

(45) Mention de la délivrance du brevet:
**14.06.89 Bulletin 89/24**

(84) Etats contractants désignés:
**AT BE CH DE ES FR GB GR IT LI LU NL SE**

(56) Documents cités:
**FR-A- 2 136 324**
**FR-A- 2 325 497**
**US-A- 3 113 738**
**US-A- 3 616 001**
**US-A- 3 941 644**

(73) Titulaire: **MICHELIN & CIE (Compagnie Générale des Etablissements Michelin) Société dite:, 4 rue du Terrail, F-63000 Clermont-Ferrand(FR)**

(72) Inventeur: **Debroche, Claude, Impasse du Grand Puy, F-63118 Cebazat(FR)**
Inventeur: **Laurent, Daniel, 23, avenue de la Plaine Fleurie, F-38240 Meylan(FR)**

(74) Mandataire: **Renaudie, Jacques et al, Michelin & Cie Service K. Brevets, F-63040 Clermont-Ferrand Cédex(FR)**

ACTORUM AG

**Description**

La présente invention se rapporte à la fabrication des pneumatiques. Plus particulièrement, elle concerne un procédé et une machine de fabrication d'un renforcement pour pneumatiques.

Les pneumatiques sont le plus souvent renforcés par ce que l'on appelle couramment des nappes, comportant une pluralité de fils adjacents et sensiblement parallèles. Dans les renforcements de sommet encore appelés ceintures, lesdits fils sont disposés généralement en biais par rapport à un plan perpendiculaire à l'axe de rotation du pneumatique. Le terme "fil" doit être compris dans un sens le plus général, à savoir aussi bien un fil unitaire qu'un câble formé par l'assemblage de plusieurs fils unitaires, ou un assemblage équivalent. Dans l'art antérieur, le procédé le plus usuel consiste à préparer, à partir d'un grand nombre de bobines de fils déroulées simultanément, des nappes dont les fils sont orientés parallèlement à leur plus grande longueur et sont enrobés dans du caoutchouc. Ces nappes sont ensuite coupées à l'angle voulu en morceaux de largeur appropriée, puis ces morceaux de nappes sont aboutés par leurs extrémités parallèles aux fils, avec ou sans superposition de fils, pour former des produits intermédiaires ou semi-finis utilisés lors de la fabrication du pneumatique proprement dite. La fabrication de tels produits semi-finis est illustrée par exemple par le brevet US 3 573 135.

Ce procédé requiert un outillage coûteux et impose de fabriquer un grand nombre de nappes différentes en fonction des angles de fils, de l'espacement des fils et des largeurs de nappes nécessités par les architectures de pneumatiques à réaliser. Pour les pneumatiques à carcasse radiale, les nappes de carcasse sont coupées à un angle α de 90° par rapport audit plan perpendiculaire à l'axe de rotation du pneumatique. Quant aux nappes destinées à renforcer le sommet du pneumatique, c'est-à-dire la partie située sous la bande de roulement, elles sont préparées suivant une quantité considérable d'angle α différents, le plus souvent, mais non limitativement, compris entre 15° et 50°.

L'état de la technique connait également d'autres façons de préparer des nappes de renforcement de sommet, où les fils de renforcement sont disposés l'un après l'autre par un mouvement de va-et-vient pour former une nappe de largeur et d'angle voulu, comme décrit par le brevet US 4 409 059. Cela implique là encore un appareillage relativement complexe, ne permettant que très difficilement des cadences élevées de par l'existence de mouvements alternatifs.

Le but de la présente invention est de proposer un procédé qui permette de fabriquer un renforcement pour pneumatiques très simplement, à partir d'une bobine de fil, et en ne faisant parcourir au fil que des mouvements dont la réalisation mécanique soit simple, et en particulier qui permette de réaliser un renforcement in situ, c'est-à-dire sur le pneumatique même au cours de sa fabrication, sans passer nécessairement par la réalisation d'un ou de plusieurs produits semi-finis.

Un autre but de l'invention est de proposer une machine pour le mise en oeuvre d'un tel procédé.

Selon l'invention, le procédé de réalisation d'un renforcement pour pneumatique, ledit renforcement comportant des fils adjacents et sensiblement parallèles, est caractérisé en ce que chaque fil de renforcement est projeté individuellement à son emplacement dans le renforcement, ledit renforcement étant fabriqué sur un élément définissant la géométrie du renforcement, ledit élément et ledit fil ayant des propriétés d'auto-adhésion.

L'invention est illustrée par les dessins suivants qui représentent :

- la figure 1, une vue en perspective des organes essentiels d'une machine selon l'invention,
- la figure 2, une vue en perspective des organes essentiels d'une autre disposition d'une machine selon l'invention,
- la figure 3, une vue en élévation de la machine représentée partiellement à la figure 2,
- la figure 4, une vue en élévation montrant les organes de pose du fil de renforcement,
- la figure 5, une vue en plan des organes de pose,
- la figure 6, une coupe selon VI, VI à la figure 4,
- la figure 7, un dispositif faisant partie d'une variante de l'invention.

Une mise en oeuvre particulièrement avantageuse de l'invention consiste à fabriquer un renforcement, en particulier un renforcement de sommet en fil métallique, directement sur l'ébauche du futur pneumatique au cours de sa fabrication. C'est ce qui est décrit par la suite. Le fil métallique utilisé est un câble en acier comportant 6 brins de 23 centièmes de millimètre de diamètre chacun. Cependant, cette mise en oeuvre n'est pas limitative, le renforcement de sommet pouvant aussi être fabriqué sur un anneau de support séparé, comme cela est courant dans les confections de pneumatique existantes. L'anneau de renforcement obtenu peut être ensuite transféré sur le pneumatique. De même, on peut également fabriquer une nappe de renforcement de sommet ou autre à plat sous forme de produit semi-fini ou encore un complexe comportant plusieurs nappes. Entre toutes ces mises en oeuvre, seul l'élément sur lequel on fabrique le renforcement change. Cet élément ne fait pas partie de l'invention. De même, la nature de matériau du fil de renforcement peut varier.

Le procédé selon l'invention est remarquable en ce que chaque fil 4 de renforcement est projeté individuellement à son emplacement par des moyens dont toutes les pièces en mouvement sont en rotation. Cesdits moyens assurent à la fois l'orientation dudit fil dans le plan de rotation desdits moyens, le dévidage d'une longueur voulue dudit fil qui est coupé à la longueur voulue grâce à des moyens de coupe, et la projection dudit fil à son emplacement dans ledit renforcement.

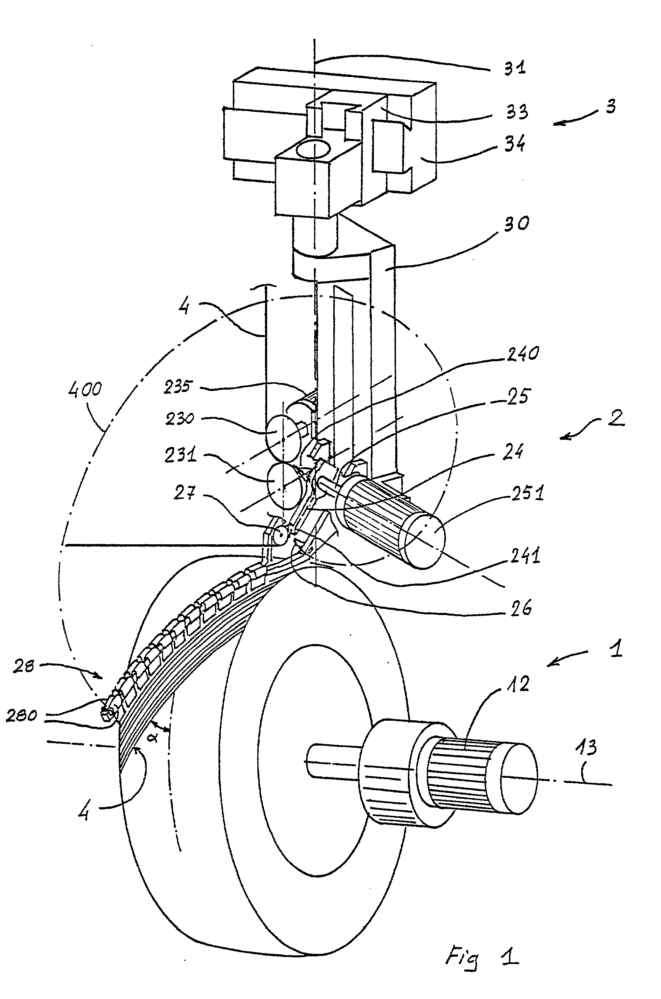

A la figure 1, on voit une machine comportant des organes de pose 2, positionnés adéquatement par rapport au pneumatique 1 grâce aux degrés de liberté qui leur sont conférés par les organes de présentation 3. Les organes de présentation 3 permettent de régler la position et l'orientation des organes de pose 2 par rapport à l'élément sur lequel on fabrique un renforcement. Selon l'architecture du pneumatique 1, celui-ci comporte déjà une armature de carcasse et/ou tout autre renforcement adéquat. Le fil 4 de renforcement est projeté comme la lanière d'un fouet sur le pneumatique 1, ce qui constitue le principe de la fabrication du renforcement. Pour que la fabrication du renforcement puisse être menée à bonne fin, il importe que le système constitué par l'élément sur lequel on projette le fil 4 et le fil 4 lui-même jouissent de propriétés d'auto-adhésion. Autrement dit, le fil 4 doit avoir tendance à coller sur ledit élément lorsqu'il s'y trouve projeté. Ceci peut être obtenu par tout moyen approprié. Par exemple, la surface 10, qui en l'occurence est la zone de sommet du pneumatique 1 en cours de fabrication, est préalablement revêtue de caoutchouc ayant des propriétés d'adhésion au fil 4 convenables. Au besoin, le fil 4 subit un traitement approprié : par exemple, il est enrobé de caoutchouc, par un dispositif de préparation du fil 4 tel que celui décrit plus loin.

Les organes de présentation 3 doivent être conçus de telle sorte que le fil 4 soit déposé à l'endroit et de la façon souhaité dans le renforcement. La zone où l'on va disposer la ceinture d'un pneumatique définit une surface approximativement en forme de tore partiel alors que la projection du fil se fait nécessairement dans un plan en dehors de l'existence de tout champ de forces transversal, par exemple d'origine magnétique ou pneumatique. Dès lors, le fil 4 se disposera selon l'intersection de cette surface par un plan. Le procédé de réalisation d'un renforcement appliqué à la fabrication d'une ceinture de pneumatique "in situ" offre pour la trajectoire du fil 4 dans ledit renforcement toutes les latitudes selon lesquelles on peut réaliser l'intersection de ladite surface par un plan. D'autre part, on peut éventuellement s'écarter quelque peu de l'intersection telle qu'elle vient d'être définie en guidant le fil 4 juste avant sa dépose.

Le premier exemple de réalisation représenté à la figure 1 permet de réaliser des renforcements de sommet du pneumatique 1 qui ne soient pas nécessairement symétriques. A cette fin, le bras de support 30 peut tourner autour d'un axe 31 pour régler l'angle de pose α des fils 4 de renforcement du sommet du pneumatique 1 et l'approche du pneumatique 1 par les organes de pose 2 est assurée par le coulissement vertical de l'axe 31 par rapport à une pièce intermédiaire 33, laquelle coulisse horizontalement par rapport à une pièce d'accrochage 34. Ainsi, l'axe 31 peut prendre axialement toutes les positions souhaitables par rapport au pneumatique 1 pour faire varier la trajectoire du fil 4 dans le renforcement.

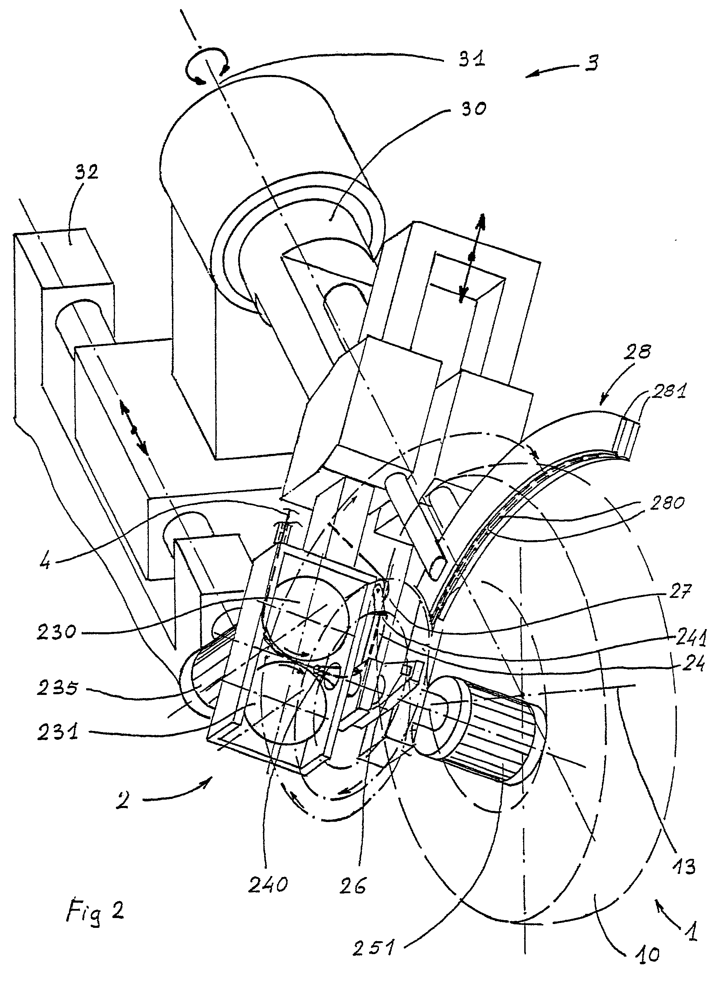

Dans un second exemple de réalisation, représenté à la figure 2, l'angle de pose α des fils 4 de renforcement du sommet du pneumatique 1 est réglé par une rotation du bras de support 30 autour d'un axe 31 qui coupe l'axe de rotation 13 du pneumatique 1 axialement au centre de celui-ci. Cela permet de réaliser des renforcements symétriques par rapport au plan médian du pneumatique 1. L'approche du pneumatique 1 est assurée par un coulissement le long d'une pièce d'accrochage 32. Pour améliorer la lisibilité des dessins, les mécanismes de commande de ces mouvements n'ont pas été représentés en détail; ils sont schématisés par des flèches.

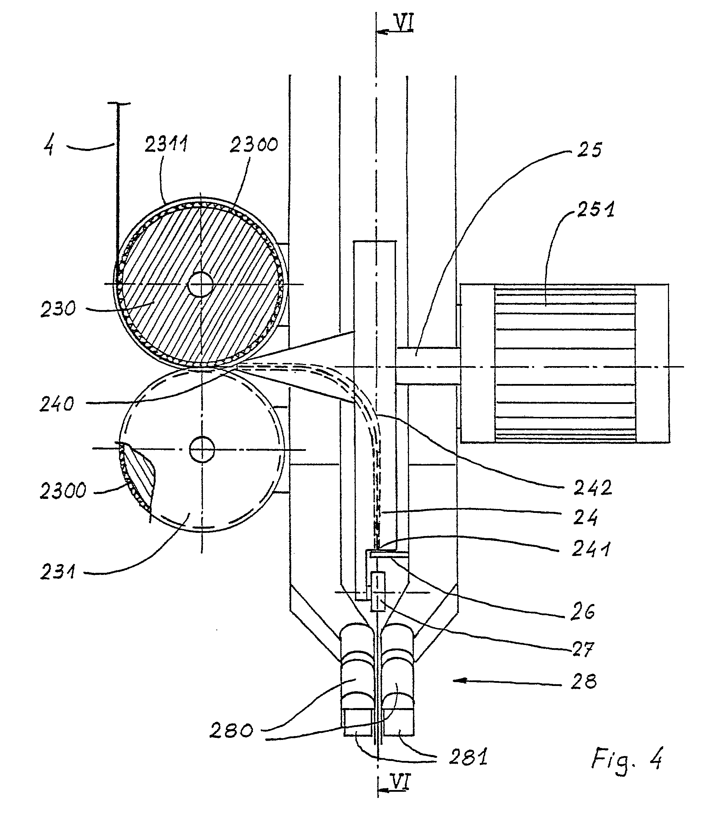

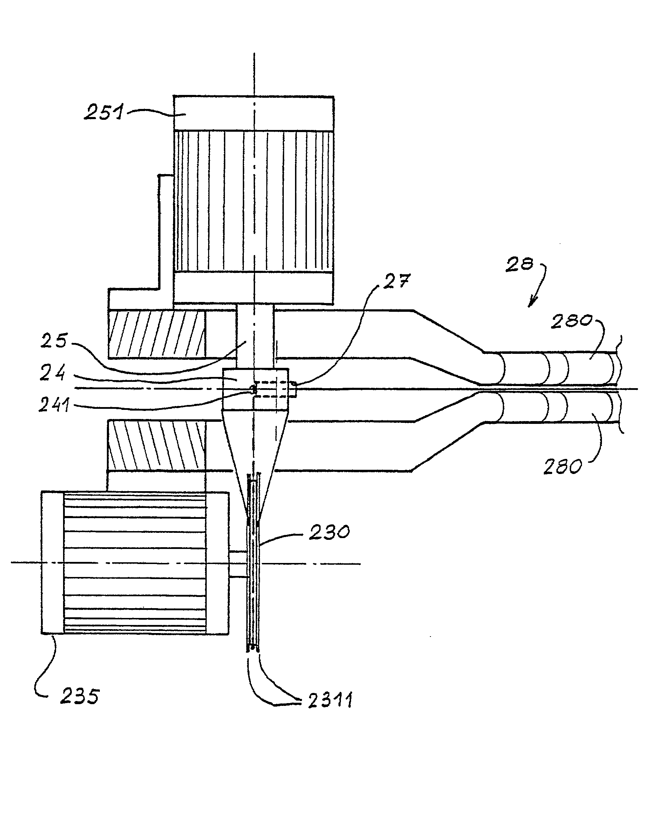

On va maintenant décrire plus en détails les organes de pose 2 en se reportant plus particulièrement aux figures 4 à 6. Les organes de pose 2 comportent essentiellement :
- des moyens imposant la vitesse linéaire de pose du fil 4 de renforcement,
- un conduit 24 rotatif fixé sur un arbre 25 constituant l'axe de rotation dudit conduit 24, de manière telle que l'extrémité 241 radialement extérieure dudit conduit 24 (appelée plus simplement "extrémité" dans la suite) soit orientée sensiblement dans un plan perpendiculaire à l'axe de rotation dudit conduit 24, ledit conduit 24 recevant le fil 4 de renforcement par sa base 240 située approximativement sur ledit axe de rotation, et le projetant par ladite extrémité 241,
- des moyens de coupe dudit fil 4.

De préférence, ladite extrémité 241 est orientée radialement, comme dans l'exemple décrit, ou bien est inclinée dans le sens opposé au sens de sa rotation. De préférence, on dispose les moyens de coupe après le conduit 24 (selon le sens de passage du fil 4) et, dans ce cas, on dispose un appui pour le fil 4, solidaire dudit conduit 24, fixé radialement dans le prolongement de ladite extrémité 241 radialement extérieure au conduit 24, procurant ainsi un appui pour le fil 4 juste en arrière par rapport au sens de la rotation du conduit 24 ; les moyens de coupe sont alors disposés radialement entre ladite extrémité 241 et ledit appui.

Les moyens imposant la vitesse linéaire de pose du fil 4 sont constitués par les galets 230 et 231 comportant un revêtement périphérique 2300 en caoutchouc afin de permettre un entraînement sans glissement du fil 4. De manière fort avantageuse, le fil 4 s'enroule sur un quart de tour autour du galet 230 qui pour cette raison comporte deux flasques 2311. Ceci assure un meilleur entraînement du fil 4. Les galets 230 et 231 sont entrainés par un moteur 235 et une courroie crantée (non représentée) garantit que leurs rotations sont toujours synchrones.

En suivant le chemin parcouru par le fil 4, celui-ci pénètre ensuite dans le conduit 24, par sa base 240 située sur l'axe de rotation dudit conduit 24, et est projeté hors de l'extrémité 241 par les galets 230 et 231 assistés de l'effet de la force centrifuge appliquée au fil 4 de par la rotation du conduit 24 imprimée par le moteur 251.

A chaque tour dudit conduit 24, le fil 4 est coupé par des moyens de coupe constitués ici très simplement par un couteau 26 immobile, fixé radialement à un niveau juste supérieur à l'extrémité 241 du conduit 24, et angulairement au voisinage de la zone de pose. La position angulaire précise dudit couteau 26 ainsi que l'approche de l'ensemble 2 des organes de pose par rapport au pneumatique 1 constituent des paramètres de réglage du positionnement des fils 4 sur ledit pneumatique 1.

Le conduit 24 comporte un réservoir 242 permettant d'accumuler momentanément le fil 4 délivré par les galets 230 et 231 lorsque ledit fil 4 est bloqué en sortie du conduit 24 par le couteau 26.

La forme précise de la pièce comportant ledit conduit 24 est bien sûr déterminée par le souci de conférer un bon équilibre statique et dynamique aux pièces en rotation.

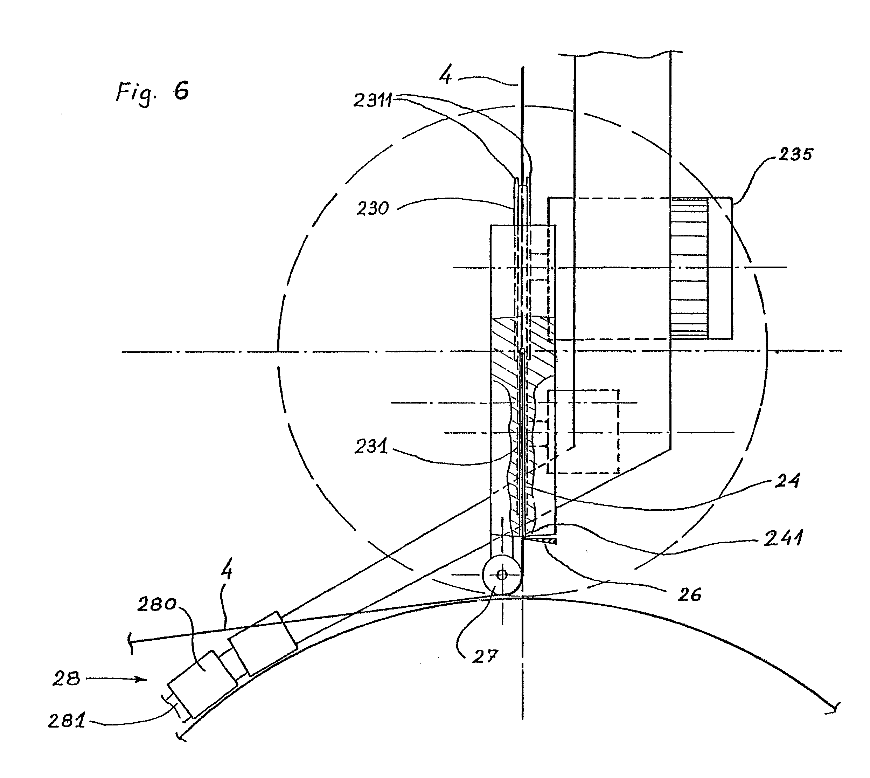

L'appui pour le fil 4 est ici constitué par un galet 27 bien visible à la figure 6. De la sorte, les frottements du fil 4 sur les organes de pose 2 sont réduits au minimum puisque, de par l'existence de l'appui, il n'y a pratiquement pas de frottement dans l'extrémité 241 radialement extérieure dudit conduit 24, et le galet 27 ne génère qu'une résistance de roulement négligeable. De préférence, le galet 27 accompagne le fil 4 jusqu'à la surface sur laquelle il est posé. Ce galet 27 aide donc à disposer le fil 4 à sa place dans le renforcement par un effet d'application.

Le pneumatique 1 est monté sur un support 11 commandé en rotation (continue ou séquencée) par le moteur 12. Tous les mouvements des organes de pose doivent être coordonnés entre eux. Ainsi, pendant que le conduit 24 fait un tour, le pneumatique doit tourner d'un petit angle correspondant au pas du renforcement de sommet, donc à l'écart entre deux fils 4 mesuré circonférentiellement. De même, pendant que le conduit 24 fait un tour, le fil 4 doit sortir radialement hors de l'extrémité 241 d'une longueur correspondant à la longueur du fil que l'on désire poser sur le sommet 10 du pneumatique 1. Les galets 230 et 231 imposent donc une vitesse de dévidage qui doit être telle que l'avance du fil 4 pendant un tour du conduit 24 est égale à la longueur du fil 4 à poser sur le pneumatique 1.

Il est également possible de réaliser des renforcements comportant des fils de longueurs différentes diposés alternativement l'un après l'autre. A cette fin, on réalise le renforcement en deux phases successives : on pose d'abord les fils d'une même longueur à un pas double du pas final, puis on pose dans les intervalles un fil d'une autre longueur au même pas double. On comprend facilement que, en général, par passages successifs, on peut ainsi réaliser toutes les variantes d'exécution souhaitables pour le renforcement de pneumatique, comportant des fils de longueurs identiques ou différentes, centrés axialement ou non.

Pour le démarrage, on lance par exemple d'abord la rotation de la tige 24, puis, le pneumatique 1 étant en rotation, on démarre le moteur 235 de commande des galets 230 et 231. Ce démarrage doit être suffisamment rapide pour que le premier fil 4 posé par le premier tour complet du conduit 24 comporte la longueur voulue. En variante, le pneumatique 1 étant en rotation, on démarre les galets 230 et 231, ainsi que la rotation de la tige 24 tout en maintenant constant le rapport des vitesses de rotation des galets 230 et 231 et de la tige 24. Dans ce cas, on respecte d'office l'exactitude de la longueur du fil 4 posé ; le démarrage doit être suffisamment rapide pour que le système atteigne sa vitesse nominale juste un peu avant que le conduit 24 ait effectué un tour complet afin que les conditions dynamiques de pose soient identiques pour tous les fils 4 du renforcement réalisé, ce qui garantit la régularité de la pose par projection. Il faut donc que l'inertie des galets 230, 231, du conduit 24 et du système d'alimentation en fil 4 soit suffisamment faible. Toutes les pièces mobiles en rotation devront avoir un moment d'inertie de rotation suffisamment faible en regard du couple moteur disponible. Au besoin, on choisira un système d'alimentation en fil 4 n'imposant aucune inertie autre que celle du fil 4 mis en mouvement lui-même.

Le procédé de réalisation d'un renforcement pour un pneumatique 1 consiste donc à poser chaque fil 4 de renforcement individuellement à son emplacement par des moyens rotatifs constitués ici essentiellement par le conduit 24 et par les galets 230 et 231 imposant la vitesse linéaire du fil 4 introduit dans ledit conduit 24. L'extrémité du fil 4 décrit une trajectoire représentée par le trait d'axe 400. Ces moyens rotatifs organisent le dévidage d'une longueur voulue dudit fil 4 hors des organes de pose. Lorsqu'une longueur de fil 4 est proche de la surface de pose, le fil 4 est coupé par le couteau 26, la trajectoire du tronçon de fil 4 ainsi libéré se poursuivant nécessairement dans le plan de rotation du conduit 24.

Afin d'assurer le bon fonctionnement de ce procédé de réalisation d'un renforcement, il est souhaitable que la projection du fil 4 se fasse sur une surface ferme, conférant une bonne géométrie audit renforcement. Lorsque l'on fabrique un renforcement de sommet sur une ébauche de pneumatique en cours de fabrication, la cavité intérieure du pneumatique doit donc préalablement être remplie par une membrane assurant cette géométrie convenable, gonflée à une pression suffisamment élevée. Ou bien, un noyau rigide démontable, définissant la forme de la surface intérieure du pneumatique, doit supporter ledit pneumatique. Pour obtenir des propriétés d'auto-adhésion convenables entre un fil 4 métallique et la surface sur laquelle on le projette, le fil 4 est revêtu de caoutchouc ayant subi un début de vulcanisation et ladite surface est également revêtue d'une couche de caoutchouc (non vulcanisé).

De manière avantageuse, la machine comporte en outre un dispositif 28 de réception du fil 4 de renforcement, recevant le fil 4 dans le plan de rotation du conduit 24. En quelque sorte, ce dispositif 28 matérialise la trajectoire du fil 4 juste avant qu'il ne touche la surface sur laquelle il est posé et assure une grande précision de pose du fil 4. Il est constitué essentiellement par des plaquettes 280 fixées à des moyens de maintien 281, lesdites plaquettes étant disposées en paires de part et d'autre de ladite trajectoire, pour assurer un guidage, et au besoin un freinage du fil 4, au moins à son extrémité, selon l'écart entre plaquettes et leur flexibilité. On peut conformer un dispositif de ce genre pour qu'il puisse écarter légèrement le fil 4 de sa trajectoire naturelle.

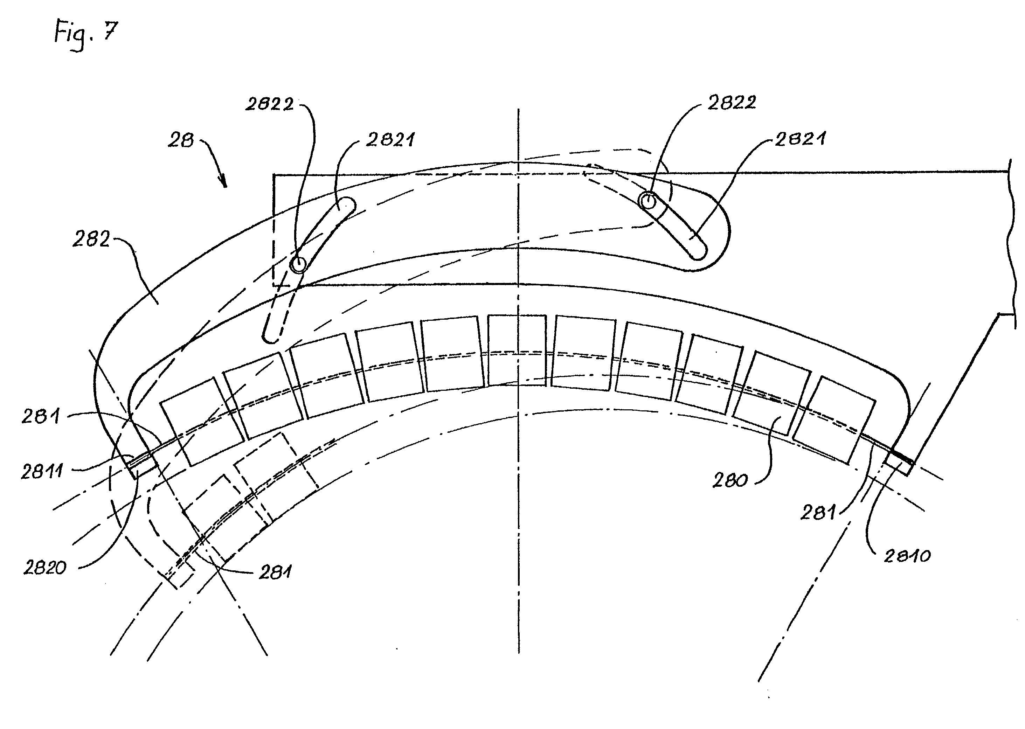

Dans une autre variante de réalisation particulièrement intéressante (figure 7), lesdits moyens de maintien 281 sont flexibles de telle sorte que le dispositif 28 de réception puisse s'adapter à la courbure de la zone d'un pneumatique sur lequel on fabrique un renforcement. On voit en traits continus le dispositif 28 dans une première configuration, et en traits interrompus le même dispositif dans une seconde configuration adaptée à une courbure plus grande du sommet d'un pneumatique. A titre d'exemple, les moyens de maintien 281 sont constitués par une lame flexible dont une extrémité 2810 est fixée de manière immobile par rapport au bras de support 3. Son positionnement par rapport au pneumatique est donc assuré par le réglage d'approche de l'ensemble des organes de pose 2. L'autre éxtrémité 2811 de ladite lame est montée sur un élément 282 dont l'éxtrémité 2820 décrit une trajectoire appropriée, imposée par le glissement de deux rainures 2821 sur deux ergots 2822 fixes par rapport au bras de support 3.

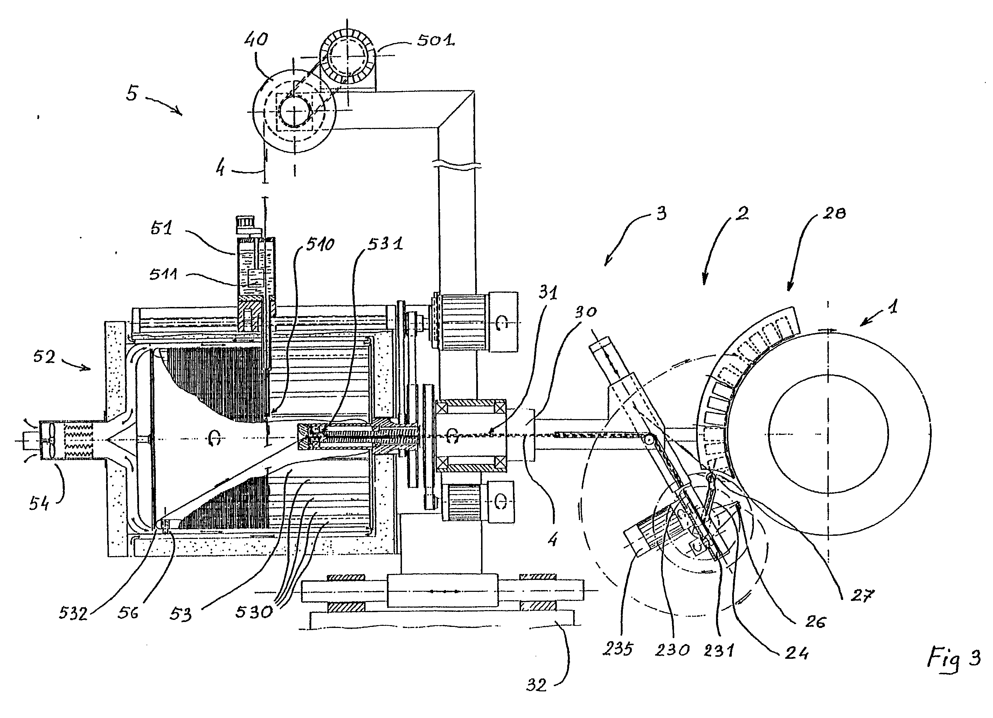

La description qui suit se rapporte à un dispositif 5 de préparation du fil 4, représenté à la figure 3. Le rôle de ce dispositif 5 est d'une part d'enrober le fil 4 d'une couche de caoutchouc et de prévulcaniser partiellement cette couche, et d'autre part de stocker au moins la quantité de fil 4 nécessaire à la réalisation d'un renforcement d'une manière telle que ledit fil 4 puisse être appelé par les moyens imposant la vitesse linéaire de pose du fil 4 sans qu'il ne s'oppose à cet appel d'autre inertie que celle du fil 4 lui-même.

Le fil 4 est approvisionné en bobines 40. Le déroulement de ladite bobine est contrarié par un frein pour maintenir une tension dans le fil 4. Le fil 4 plonge ensuite dans un godet 51 empli de dissolution de caoutchouc (concentration de préférence au moins égale à 20 % de caoutchouc pour obtenir un liquide très visqueux). A l'extrémité inférieure du godet 51, on trouve une filière 510 de diamètre à peine supérieur à celui du fil 4. Pour améliorer l'enduction du fil 4 par la dissolution, on a prévu un rouleau 511 amenant en permanence de la dissolution le long du fil 4. Ensuite, le fil pénètre à l'intérieur d'une enceinte cylindrique 52 (représenté en coupe à la figure 3) à l'intérieur de laquelle il peut être enroulé sur un tambour 53 portant des tôles radiales 530 sur la tranche desquelles on enroule des spires du fil 4 revêtu de la dissolution de caoutchouc. Le fil 4 y est disposé de manière telle qu'il puisse être appelé par les galets 230 et 231 tout en maintenant le tambour immobile. A cette fin, on enroule une couche 4 autour du tambour 53 en le disposant selon un pas supérieur au diamètre du fil 4 par une rotation du tambour 53 coordonnée avec un déplacement de la filière 510 de présentation du fil 4 dans le cylindre 52 le long d'une fente parallèle à l'axe du cylindre 52 aménagée dans la paroi de celui-ci. Cette filière 510 et le godet 51 sont mécaniquement reliés. Le fil 4 est en permanence enfilé au travers de tous les éléments de la machine. Notamment, au cours du chargement du tambour 53, le fil 4 est en appui d'une part sur le tambour 53 mis en rotation, et d'autre part est enfilé dans les organes de pose 2 constituant un ensemble immobile en rotation par rapport au cylindre 52 et inactifs pendant la phase de chargement du tambour 53. Pour ne pas tordre le fil 4 sur lui-même, il faut l'immobiliser en rotation par rapport au tambour 53 au moyen d'une pince 531 et le laisser tourner librement sur lui-même dans tous les éléments de la machine en écartant les galets 230 et 231 l'un de l'autre.

Pour débuter l'enroulage du fil 4 sur le tambour 53, un ergot 56 proche du bord axial de gauche du tambour 53 (voir figure 3) fait saillie hors dudit tambour 53 jusqu'à lécher la paroi radialement intérieure du cylindre 52. La filière 510 présente le fil 4 axialement du côté de l'ergot 56. Le tambour mis en rotation, l'ergot 56 accroche nécessairement le fil 4, ce qui débute l'enroulage. Celui-ci est arrêté lorsque l'on a stocké suffisamment le fil 4 pour réaliser un renforcement.

Lorsque le tambour 53 est chargé, on prévulcanise légèrement le caoutchouc déposé sur le fil 4 en faisant circuler un courant d'air chaud, l'air étant réchauffé par tout moyen de chauffage convenable (par exemple des résistances électriques) et mis en circulation par un dispositif convenable 54 (par exemple un ventilateur) et chemine en périphérie du tambour 53 (comme figuré par les flèches à la figure 3) pour ressortir vers une hotte d'aspiration.

Lors de la réalisation du renforcement, le fil 4, appelé par les galets 230 et 231, quitte le tambour 53 (maintenu immobile) par l'extrémité où l'on a débuté l'enroulement sur ledit tambour (à gauche sur la figure 3) en glissant sur l'extrémité arrondie 532. Pendant cette phase, on escamote l'ergot 56 et on ouvre la pince 531.

Pour effectuer un nouveau chargement, il est nécessaire de ramener le tronçon du fil 4 ou les quelques spires de fil 4 disposées à extrémité axiale de droite du tambour vers le côté gauche, c'est-à-dire du côté vers lequel le fil 4 est appelé par les organes de pose 2. On a donc prévu un moteur 501 qui permet de rappeler le fil 4 sur la bobine 40 pendant que la filière 510 regagne le côté gauche du tambour 53.

Le cycle complet de la machine est donc le suivant : chargement du tambour 53, prévulcanisation du revêtement caoutchouc du fil 4, puis pose du fil 4 à son emplacement dans le renforcement. On peut bien sûr prévoir toute disposition équivalente pour alimenter les organes de pose 2 en fil 4, pourvu que cette alimentation se fasse de préférence sans autre inertie que celle du fil 4 ou, à tout le moins, une inertie très faible compatible avec l'accélération du conduit 24 et des galets 230 et 231 jusqu'à leur vitesse nominale en un tour du conduit 24, ladite vitesse devant être suffisante pour réaliser la pose par projection. A titre d'exemple, on peut poser le câble métallique du type indiqué ci-dessus au moyen d'un conduit 24 dont la vitesse de rotation est au moins de l'ordre de 1500 t/mn.

L'invention qui vient d'être exposée n'est pas limitée aux exemples décrits, mais elle englobe également toutes les variantes qui en reproduisent les éléments essentiels, notamment celles qui assurent la pose d'un fil de renforcement de manière continue en procurant au fil un écoulement à la fois radial et circonférentiel pour le lancer, par tronçons, à sa position dans ledit renforcement.

**Revendications**

1. Procédé der réalisation d'un renforcement pour pneumatique, ledit renforcement comportant des fils (4) adjacents et sensiblement parallèles, caractérisé en ce que chaque fil (4) de renforcement est projeté individuellement à son emplacement dans le renforcement, ledit renforcement étant fabriqué sur un élément définissant la géométrie du renforcement, ledit élément et le fil (4) ayant des propriétés d'auto-adhésion.

2. Procédé selon la revendication 1, caractérisé en ce que chaque fil (4) de renforcement est projeté individuellement à son emplacement dans ledit renforcement par des moyens dont toutes le pièces en mouvement sont en rotation.

3. Procédé selon la revendication 1, caractérisé en ce que chaque fil (4) de renforcement est projeté individuellement à son emplacement par des moyens rotatifs assurant à la fois l'orientation dudit fil (4) dans le plan de rotation desdits moyens, le dévidage d'une longueur voulue dudit fil (4) qui est coupé à la longueur voulue grâce à des moyens de coupe, et la projection dudit fil (4) à son emplacement dans ledit renforcement.

4. Procédé selon l'une des revendications 1 à 3, caractérisé en ce que ledit renforcement est réalisé sur l'ébauche de pneumatique (1) en cours de fabrication.

5. Machine de fabrication d'un renforcement pour pneumatique, ledit renforcement comportant des fils (4) adjacents et sensiblement parallèles, caractérisée en ce qu'elle comporte des organes de pose comprenant essentiellement:
— des moyens imposant la vitesse linéaire de pose du fil de renforcement,
— un conduit (24) rotatif fixé sur un arbre (25) constituant l'axe de rotation dudit (24) conduit, de manière telle que l'extrémité (24) radialement extérieure dudit conduit soit orientée sensiblement dans un plan perpendiculaire à l'axe de rotation dudit conduit (24), ledit conduit (24) recevant le fil (4) de renforcement par sa base (240) située approximativement sur ledit axe de rotation, et le projetant par ladite extrémité (24) radialement extérieure,
— des moyens de coupe dudit fil (4).

6. Machine selon la revendication 5, caractérisé en ce qu'elle comporte un appui pour le fil (4), solidaire dudit conduit (24), fixé radialement dans le prolongement de ladite extrémité (241) radialement extérieure et juste en arrière par rapport au sens de la rotation dudit conduit (24), et en ce que les moyens de coupe dudit fil (4) sont situés radialement entre ladite extrémité (241) radialement extérieure et ledit appui.

7. Machine selon la revendication 6, caractérisée en ce que les moyens de coupe dudit fil sont constitués par un couteau (26) fixé angulairement au voisinage de la zone de pose dudit fil (4).

8. Machine selon la revendication 5, 6 ou 7, caractérisée en ce que ledit appui est constitué par un galet (27).

9. Machine selon l'une des revendications 5 à 8, caractérisée en ce qu'elle comporte en outre un dispositif de réception du fil de renforcement, recevant le fil dans le plan de rotation dudit conduit.

10. Machine selon la revendication 9, caractérisée en ce que le dispositif (28) de réception est constitué essentiellement par des plaquettes (280) fixées à des moyens de maintien (281), disposées en paires de part et d'autre de la trajectoire du fil (4).

11. Machine selon la revendication 10, caractérisé en ce que lesdits moyens de maintien (281) sont flexibles de telle sorte que le dispositif (28) de réception puisse s'adapter à la courbure de la zone d'un pneumatique (1) sur lequel on fabrique un renforcement.

12. Machine selon l'une des revendications 5 à 11, caractérisée en ce que les organes de pose sont supportés par des organes de présentation (3) permettant de régler la position et l'orientation des organes de pose par rapport à un élément sur lequel on fabrique le renforcement.

13. Machine selon l'une des revendications 5 à 12, caractérisée en ce qu'elle comporte un dispositif de préparation (5) du fil (4), destiné à enrober le fil (4) d'une couche de caoutchouc, de prévulcaniser partiellement ladite couche de caoutchouc, et à stocker la quantité de fil (4) nécessaire à la réalisation d'un renforcement d'une manière telle que ledit fil (4) puisse être appelé par lesdits moyens imposant la vitesse linéaire de pose dudit fil (4) sans qu'il ne s'oppose à cet appel d'autre inertie que celle du fil (4) lui-même.

14. Machine selon la revendication 13, caractérisée en ce que ledit dispositif comporte un tambour (53) portant des tôles radiales (530) sur la tranche desquelles on enroule des spires de fil (4), un godet (51) comportant du caoutchouc en dissolution dans lequel plonge le fil (4), et des moyens de chauffage.

15. Machine selon la revendication 5, caractérisée en ce que les moyens imposant la vitesse linéaire sont constitués par deux galets (230 et 231).

16. Machine selon la revendication 15, caractérisée en ce que lesdits galets (230, 231) comportent un revêtement périphérique de caoutchout (2300).

**Patentansprüche**

1. Verfahren zur Herstellung einer Luftreifenbewehrung, die Fäden (4) aufweist, die einander benachbart und im wesentlichen parallel zueinander sind, dadurch gekennzeichnet, daß jeder Verstärkungsfaden (4) einzeln auf seinen Platz in der Verstärkung aufgeschlagen wird, und daß die Verstärkung auf einem Element hergestellt wird, welches die Geometrie der Verstärkung definiert, wobei das Element und der Faden (4) Selbstklebeeigenschaften aufweisen.

2. Verfahren nach Anspruch 1, dadurch gekennzeichnet, daß jeder Verstärkungsfaden (4) einzeln durch Mittel auf seine Position in der Verstärkung aufgeschlagen wird, deren bewegliche Teile rotieren.

3. Verfahren nach Anspruch 1, dadurch gekennzeichnet, daß jeder Verstärkungsfaden (4) einzeln auf seine Position durch rotierende Mittel aufgeschlagen wird, die gleichzeitig die Orientierung des Fadens (4) in der Rotationsebene der Mittel, das Abspulen einer gewünschten Länge des Fadens (4), der durch Schneidmittel bei der gewünschten Länge abgeschnitten wird und das Aufbringen des Fadens (4) an seine Position in der Verstärkung bewirken.

4. Verfahren nach einem der Ansprüche 1 bis 3, dadurch gekennzeichnet, daß die Verstärkung auf dem Rohling des Luftreifens (1) während seiner Herstellung erzeugt wird.

5. Vorrichtung zur Herstellung einer Verstärkung für Luftreifenhüllen, wobei die Verstärkung einander benachbarte und im wesentlichen zueinander parallele Fäden(4) aufweist, dadurch gekennzeichnet, daß sie Positionierorgane aufweist, die im wesentlichen:

– Mittel zur Aufbringung der linearen Geschwindigkeit des Verstärkungsfadens,

– eine rotierende Führung (24), die auf einem Arm (25) befestigt ist, der die Rotationsachse der Führung (24) bildet, so daß das radial äußere Ende (24) der Führung im wesentlichen in einer Ebene rechtwinklig auf die Rotationsachse der Führung (24) ausgerichtet ist, wobei die Führung (24) den Verstärkungsfaden (4) mit ihrer Basis (240), die zumindest angenähert auf der Rotationsachse sitzt, empfängt und durch das radial äußere Ende (24) abgibt, und

– Schneidmittel für den Faden (4) umfaßt.

6. Vorrichtung nach Anspruch 5, dadurch gekennzeichnet, daß sie einen Anschlag für den Faden (4) aufweist, der mit der Führung (24) verbunden und radial in der Verlängerung des Endes (241), außerhalb und in Drehrichtung der Führung (24) direkt hinter ihr angeordnet ist, und daß die Schneidmittel für den Faden (4) radial zwischen dem radial äußeren Ende (241) und dem Anschlag vorgesehen sind.

7. Vorrichtung nach Anspruch 6, dadurch gekennzeichnet, daß die Schneidmittel für den Faden aus einem Messer (26) bestehen, das, in Umfangsrichtung gesehen, in Nachbarschaft der Ablegezone des Fadens (4) befestigt ist.

8. Vorrichtung nach Anspruch 5, 6 oder 7, dadurch gekennzeichnet, daß der Anschlag aus einer Rolle (27) besteht.

9. Vorrichtung nach einem der Ansprüche 5 bis 8, dadurch gekennzeichnet, daß sie weiters eine Vorrichtung zur Aufnahme des Verstärkungsfadens umfaßt, die den Faden in der Rotationsebene der Führung empfängt.

10. Vorrichtung nach Anspruch 9, dadurch gekennzeichnet, daß die Aufnahmevorrichtung (28) im wesentlichen aus Platten (280) besteht, die durch Haltemittel (281) fixiert sind und paarweise zu beiden Seiten der Trajektorie des Fadens (4) angeordnet sind.

11. Vorrichtung nach Anspruch 10, dadurch gekennzeichnet, daß die Haltemittel (281) flexibel sind, so daß die Ablagevorrichtung (28) sich der Krümmung des Teils des Luftreifens (1) anpassen kann, auf dem die Verstärkung hergestellt wird.

12. Vorrichtung nach einem der Ansprüche 5 bis 11, dadurch gekennzeichnet, daß die Positionierorgane von Halteorganen (3) getragen werden, die es erlauben, die Position und Orientierung der Positionierorgane bezüglich eines Elementes, auf dem die Verstärkung hergestellt wird, zu regeln.

13. Vorrichtung nach einem der Ansprüche 5 bis 12, dadurch gekennzeichnet, daß sie eine Vorbereitungsvorrichtung für den Faden (4) umfaßt, die dazu bestimmt ist, den Faden (4) mit einer Kautschukschichte zu umhüllen, diese Kautschukschichte teilweise vorzuvulkanisieren und eine solche Menge des Fadens zu lagern, die notwendig ist, um eine Verstärkung herzustellen, wobei der Faden (4) von den Mitteln, die ihm die lineare Geschwindigkeit erteilen, ergriffen werden kann, ohne daß diesem Ergreifen eine andere Trägheit als die vom Faden (4) selbst bewirkte, entgegenwirkt.

14. Vorrichtung nach Anspruch 13, dadurch gekennzeichnet, daß die Vorrichtung eine Trommel (53) aufweist, die in Umfangsrichtung gewellt ist, wobei auf einem Teil Wicklungen des Fadens (4) aufgewickelt werden, und daß ein Behälter (51) vorgesehen ist, der gelösten Kautschuk enthält, in den der Faden (4) eintaucht, und daß schließlich Heizmittel vorgesehen sind.

15. Vorrichtung nach Anspruch 5, dadurch gekennzeichnet, daß die Mittel zur Aufbringung der linearen Geschwindigkeit aus zwei Rollen (230 und 231) bestehen.

16. Vorrichtung nach Anspruch 15, dadurch gekennzeichnet, daß die Rollen (230, 231) an ihrem Mantel eine Kautschukbeschichtung (2300) aufweisen.

## Claims

1. A process for producing a tire reinforcement, the reinforcement comprising adjacent, substantially parallel cords (4), characterized by the fact that each reinforcement cord (4) is projected individually into its place in the reinforcement, the reinforcement being produced on an element which defines the geometry of the reinforcement, the element and the cord (4) having self-adhering properties.

2. A process according to claim 1, characterized by the fact that each reinforcement cord (4) is projected individually into its place in the reinforcement by means all the moving parts of which are in rotation.

3. A process according to claim 1, characterized by the fact that each reinforcement cord (4) is projected individually into its place in the reinforcement by rotary means which assure simultaneously orienting of the cord (4) in a plane of rotation of the rotary means, unwinding of a desired length of the cord (4) which is cut to the desired length by cutting means, and projecting of the cord (4) into its place in the reinforcement.

4. A process according to claim 1 to 3, characterized by the fact that the reinforcement is made on a tire (1) blank during manufacture.

5. A machine for the production of a tire reinforcement, the reinforcement comprising adjacent, substantially paralled cords (4), characterized by the fact that the machine comprises laying members comprising

– means imposing a linear speed of laying on the reinforcement cord,

– a rotary conduit (24) fastened on a shaft (25) constituting an axis of rotation of the conduit (24), in such a manner that a radially outer extremity (24) of the conduit is directed substantially in a plane perpendicular to the axis of rotation of the conduit (24), the said conduit (24) receiving the reinforcement cord (4) at its base (240) which is located approximately on the axis of rotation and projecting the same through the radially outer extremity (24).

— means for cutting the cord (4).

6. A machine according to claim 5, characterized by the fact that the machine comprises a support for the cord (4), which support is integral with the conduit (24), fastened radially in an extension of the radially outer extremity (241) and just to the rear with respect to the direction of rotation of the conduit (24), and by the fact that the means for cutting the cord (4) are located radially between the radially outer extremity (241) and the support.

7. A machine according to claim 6, characterized by the fact that the means for cutting the cord are formed of a knife (26) which is fastened at an angle in the vicinity of the zone of laying of the cord (4).

8. A machine according to claims 5, 6 or 7, characterized by the fact that the support consists of a roller (27).

9. A machine according to one of the claims 5 to 8, characterized by the fact that the machine further comprises a device for receiving the reinforcement cord, receiving the cord in the plane of rotation of the conduit.

10. A machine according to claim 9, characterized by the fact that the receiving device (28) is formed essentially of plates (280) fastened to holding means (281), the plates being arranged in pairs on opposite sides of the trajectory of the cord (4).

11. A machine according to claim 10, characterized by the fact that the holding means (281) are flexible so that the receiving device (28) can adapt itself to the curvature of the zone of a tire (1) on which a reinforcement is produced.

12. A machine according to one of the claims 5 to 11, characterized by the fact that the laying members are supported by presentation members (3) which make it possible to adjust the position and the orientation of the laying members with respect to an element on which the reinforcement is produced.

13. A machine according to one of the claims 5 to 12, characterized by the fact that the machine comprises a device (5) for the preparation of the cord (4), intended to coat the cord (4) with a layer of rubber, to partially pre-vulcanize the layer of rubber and to store at least the amount of cord (4) necessary for the production of a reinforcement in such a manner that the cord (4) can be called up by the means imposing the linear speed of laying of the cord (4) without opposing any inertia other than that of the cord (4) itself to the calling up.

14. A machine according to claim 13, characterized by the fact that the device comprises a drum (53) bearing radial plates (530) on the edge of which turns of cord (4) are wound, a cup (51) containing a rubber solution into which the cord (4) is immersed, and heating means.

15. A machine according to claims 5, characterized in that fact that means imposing a linear speed consist of rollers (230 and 231).

16. A machine according to claim 15, characterized by the fact that said rollers (230 and 231) have a peripheral covering (2300) of rubber.

*Fig 1*

Fig 2

Fig 3

Fig. 4

251

25

24

241

27

28

280

280

230

235

2311

Fig. 6

Fig. 7

EP 0 248 301 B1